# EUROPEAN PATENT APPLICATION

(11) **EP 3 922 567 A1**
(43) Date of publication of application: **15.12.2021**
(21) Application number: 20315302.8
(22) Date of filing: 11.06.2020
(51) Int. Cl.: B64F 5/10, G05B 19/418, F16B 5/00

(54) **METHOD FOR JOINING TWO PIECES**

(71) Applicant: Airbus SAS, 31700 Blagnac (FR)
(72) Inventor: Bourbon, Pierre-Alexandre, 21129 Hamburg (DE); Shivhare, Neelam, 31700 Blagnac Cedex (FR); Lam, Diem Huynh, 21129 Hamburg (DE); Forster, Kevin, Bristol, BS99 7AR (GB); Booth, Andrew, 31700 Blagnac Cedex (FR); Munro, Dirk, 21129 Hamburg (DE)
(74) Representative: Cabinet Le Guen Maillet

(57) **Abstract**

The invention relates to a method for joining two pieces (10a-b) and comprises a manufacturing of the first piece (10a) with holes (20a) and of the second piece (10b), a virtual mapping of each piece (10a-b) is stored in a system, a creation by the system of a virtual assembly, a Monte Carlo simulation is realized by the system until a predictive fit reaches a set condition to find the position of the holes (20b) of the second piece (1 Ob), a drilling of said holes (20b) in the second piece (10b), and an assembly and fixation of the two pieces (10a-b).

## Description

### FIELD OF THE INVENTION

The invention relates to a method for joining two pieces.

### BACKGROUND OF THE INVENTION

In the industry, in particular the aeronautic industry, it is often necessary to join two pieces.

At this end, different methods exist to set the two pieces in position and to joint them. For example, it is known to scan the two pieces, to realize a virtual assembly, and to realize wedges to fill gaps between the two pieces.

Even if such method gives good assembly, it is necessary to find a simplest method for which it is not necessary to realize wedges.

### SUMMARY OF THE INVENTION

An aim of the present invention is to propose a method for joining two pieces which is simple and doesn't need any additional part.

It is proposed a method for joining a first piece and a second piece with fasteners and comprising:
- a first step during which the first piece is manufactured including the drilling of holes for the fasteners and during which the second piece is manufactured,
- a second step during which a virtual mapping of the first piece is stored in the memory of a system, and comprising firstly physical measurements of the first piece thus manufactured including physical measurements of the holes, and secondly a storing of said physical measurements in the memory,
- a third step during which a virtual model of the second piece is stored in the memory and comprising firstly physical measurements of the second piece thus manufactured, and secondly a storing of said physical measurements in the memory,
- a fourth step during which the system uses the physical measurements thus stored to create a virtual assembly of the first piece and of the second piece,
- a fifth step during which the system realizes a Monte Carlo simulation until a predictive fit reaches a set condition in order to find the position and the diameter of the holes to realize in the second piece,
- a sixth step during which the holes thus found are realized in the second piece, and
- a seventh step during which the first piece and the second piece are assembled and fixed together thanks to fasteners.

With such method, the position of the holes of the second piece can be simply evaluated without any jig.

Advantageously, the Monte Carlo simulation comprises a step during which a distance between each hole and the edges of the model second piece is defined, a step during which the position of all the holes thus defined is balanced to adopt the best fit inside the edges, and a step during which a center point is created for each hole.

### BRIEF DESCRIPTION OF THE DRAWINGS

The aforementioned characteristics of the invention, as well as others, will emerge more clearly on reading the following description of an embodiment example, said description being made in relation to the attached drawings, among which:
Fig. 1 is a perspective view of pieces to join with the method of the invention, and
Fig. 2 schematically represents an example of hardware architecture of a system usable in the invention.

### DETAILED DESCRIPTION OF EMBODIMENTS

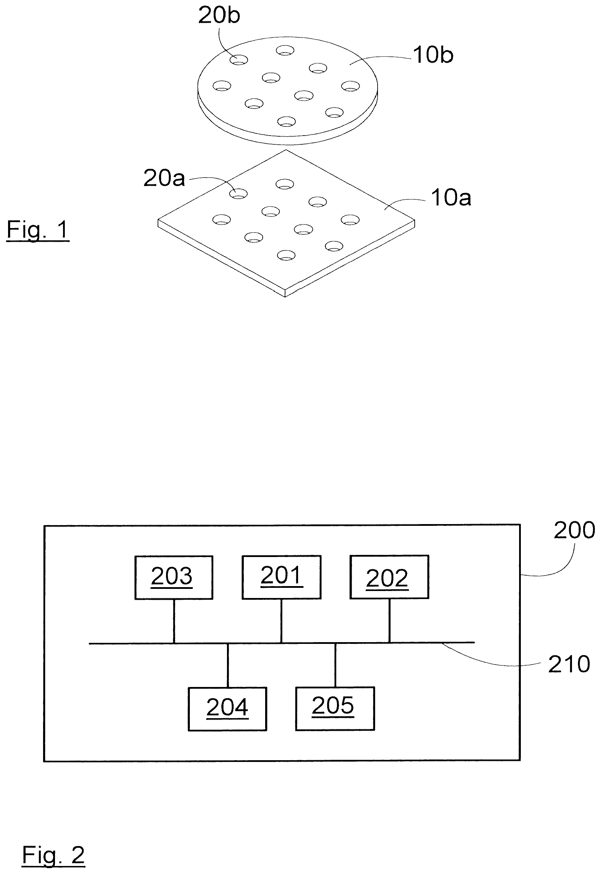

Fig. 1 shows two pieces 10a-b to join with the method of the invention. Even if the shown pieces are simple pieces, the method for joining can be used with complex pieces obtained from the assembly of several simple pieces.

Fig. 2 schematically represents a hardware architecture of a system usable in the scope of the invention.

According to the shown architecture, the system in question, referred to as a system 200, comprises the following components interconnected by a communications bus 210: a processor, microprocessor, microcontroller or CPU (Central Processing Unit) 201; a RAM (Random-Access Memory) 202; a ROM (Read-Only Memory) 203, such as an EEPROM (Electrically Erasable Programmable ROM), for example a Flash memory; a HDD (Hard-Disk Drive) 204, or any other device adapted to read information stored on a storage medium, such as an SD (Secure Digital) card reader; at least one communication interface 205.

CPU 201 is capable of executing instructions loaded into RAM 202 from ROM 203 or from an external memory, such as HDD 204 or an SD card. After the system 200 has been powered on, CPU 201 is capable of reading instructions from RAM 202 and executing these instructions. The instructions form one computer program that causes CPU 201 to perform the steps performed by the system in question as described herein.

Thus, the steps and algorithms described hereinafter may be implemented in software form by execution of a set of instructions or program by a programmable computing machine, such as a PC, a DSP (Digital Signal Processor) or a microcontroller; or else implemented in hardware form by a machine or a dedicated component, such as an FPGA (Field-Programmable Gate Array) or an ASIC (Application-Specific Integrated Circuit).

The method consists in realizing a first piece 10a with holes 20a, a second piece 10b without holes 20b, entering physical information of the first piece 10a and of the second piece 10b in the system 200, calculating positions of the holes 20b of the second piece 10b and realizing the corresponding holes 20b in the second piece 10b to align each pair of holes for the assembly.

The method consists firstly in manufacturing the first piece 10a, it means realizing the first piece 10a according to the required dimensions and drilling the holes 20a through it, these holes 20a will be used to fix the fasteners. The manufacturing is realized with standard industrial capability and cost.

The second piece 10b is also manufactured with standard industrial capability and cost but without holes 20b.

In the following description, the term "virtual" is related to a set of information which can be entered in the RAM 202 and used in a software implementing the method of the invention.

Secondly, the method consists in realizing a virtual mapping of the first piece 10a and storing this virtual mapping in the RAM 202. The virtual mapping includes several physical information of the first piece 10a. This physical information includes firstly the position of the holes 20a for fasteners. In addition, other information can be stored like the volume of the first piece 10a, the edges of the first piece 10a, the surface waviness, distances between edges of the first piece 10a when it is an assembled piece or other. The physical information can be one of the elements, or several of them.

The virtual mapping is realized by fully physical measurements of the first piece 10a and the corresponding holes 20a and eventually other physical measurements and these physical measurements are entered in the RAM 202.

For example, when the first piece 10a is a simple piece, only the drilled holes 20a can be mapped.

For example, when the first piece 10a is a complex piece, i.e. made of several simple pieces, drilled holes, edges of the piece, distance between parts of the piece can be mapped.

Thirdly, a virtual model of the second piece 10b is realized by full physical measurements of the second piece 10b. These physical measurements are entered in the RAM 202 and comprise for example edge of the second piece 10b, volume of the second piece 10b.

Fourthly, the physical measurements of the two pieces 10a-b are used by the system 200 to create a virtual assembly of the first piece 10a and of the second piece 10b.

The virtual assembly is realized by virtual combination of the physical measurements, i.e. the map of the holes 20a of the first piece 10a and the virtual model of the second piece 10b.

Fifthly, an analysis of the assembly is realized by the system 200 through a Monte Carlo simulation until a predictive fit reaches a set condition in order to find the position and the diameter of the holes 20b to realize in the second piece 10b and eventually other physical information of this second piece 10b.

The set condition is stored in the RAM 202 and can vary with the requirements of the engineering intent, the assembly constraints or limitations, such as mechanical deformation of pieces 10a-b, thermal impacts, fixing points and gravity effects.

The Monte Carlo simulation repositions successively the holes 20b on the model of the second piece 10b, until the positions meet the defined set conditions.

For example, this simulation is based on a step during which a distance between each hole 20b and the edges of the model second piece 10b is defined in order to make sure that each hole 20b is inside said edges, on a step during which the position of all the holes 20b thus defined is balanced to adopt the best fit inside the edges, and on a step during which a center point is created for each hole 20b to realize in the second piece 10b.

A further step can be done during which the virtual assembly is used to position the model to fulfil the overall assembly needs. This step is particularly used in case of assembly of complex pieces.

The use of such predictive condition avoids the introduction of tolerances for the holes 20b of the second piece 10b.

The Monte Carlo simulation includes for example from 20 000 to 30 000 iterations to complete the simulation and to localize the holes 20b to drill.

Sixthly, the holes 20b are drilled on the real second piece 10b thanks to a tool like a CNC machine or a robot. The position and the diameter of each hole 20b are known from the previous step.

Seventhly, the two pieces 10a-b are really assembled and fixed together thanks to appropriate fasteners.

It is possible that only some of the holes 20b are realized in the second piece 10b before assembling, and that the rest of the holes 20b is realized after the assembly.

The method described before avoids also the use of jig or specified tools to realize the assembly.

## Claims

1. Method for joining a first piece (10a) and a second piece (10b) with fasteners and comprising:
- a first step during which the first piece (10a) is manufactured including the drilling of holes (20a) for the fasteners and during which the second piece (10b) is manufactured,
- a second step during which a virtual mapping of the first piece (10a) is stored in the memory (202) of a system (200), and comprising firstly physical measurements of the first piece (10a) thus manufactured including physical measurements of the holes (20a), and secondly a storing of said physical measurements in the memory (202),
- a third step during which a virtual model of the second piece (10b) is stored in the memory (202) and comprising firstly physical measurements of the second piece (10b) thus manufactured, and secondly a storing of said physical measurements in the memory (202),
- a fourth step during which the system (200) uses the physical measurements thus stored to create a virtual assembly of the first piece (10a) and of the second piece (10b),
- a fifth step during which the system (200) realizes a Monte Carlo simulation until a predictive fit reaches a set condition in order to find the position and the diameter of the holes (20b) to realize in the second piece (10b),
- a sixth step during which the holes (20b) thus found are realized in the second piece (10b), and
- a seventh step during which the first piece (10a) and the second piece (10b) are assembled and fixed together thanks to fasteners.

2. Method according to claim 1 wherein the Monte Carlo simulation comprises a step during which a distance between each hole (20b) and the edges of the model second piece (10b) is defined, a step during which the position of all the holes (20b) thus defined is balanced to adopt the best fit inside the edges, and a step during which a center point is created for each hole (20b).
